# EUROPEAN PATENT SPECIFICATION

(11) **EP 0 490 803 B1**
(45) Date of publication and mention of the grant of the patent: **17.04.1996**
(21) Application number: 91500139.0
(22) Date of filing: 04.12.1991
(51) Int. Cl.: G02B 6/44

(54) **Improvements in dielectric optic fiber cables with anti-inpact protection**
Gegen Stösse geschütztes, dielektrisches optisches Kabel
Câble diélectrique à fibres optiques avec protection contre choc

(30) Priority: 13.12.1990 ES 9003185
(43) Date of publication of application: 17.06.1992
(73) Proprietor: CABLES PIRELLI, S.A., E-08800 Volanova i La Geltru (Barcelona) (ES)
(72) Inventor: Belli, Sergio, ES-08810 Vilanova i La Geltru, Barcelona (ES)
(74) Representative: Ponti Sales, Adelaida

(56) References cited:
- DE-A- 3 201 981
- DE-A- 3 618 659
- DE-A- 3 823 965
- DE-A- 3 824 825
- DE-B- 2 628 069
- GB-A- 2 240 189

## Description

The present invention refers to improvements in dielectric optic fiber cables which make possible the achievement of a cable particularly suitable for resisting major, localized, impacts such as those resulting, for example, from shots from hunters which frequently cause lesions in cables carrying optic fibers which are particularly sensitive to all types of external impacts.

As is well known optic fibers are, in themselves, fragile, and so, when not properly protected, may be easily broken, in addition to the fact that the presence in them of mechanical stress, even in small degrees, can provoke a weakening in the signals transmitted and any of this implies the rendering useless of the cable.

It has been proved that aerial cables, particularly the completely dielectric ones, can be either totally or partially destroyed by shots from hunters, whether they be deliberate or accidental, with the result that, in order to avoid such damage, particularly in optic fiber cables, some type of protection is required.

The dielectric optic fiber cable for transmissions, communications, controls and signals, achieved according to the improvements which are the object of this invention prove to be particularly suitable for installation, retained by clamps, along the earth conductors of high tension aerial lines, thus supplanting the current forms of protection which require the substitution of the earth conductors by others able to accomodate the optic fibers and corresponding protection.

### BACKGROUND OF THE INVENTION

Up to the present time the known conventional conductors, known technically as OPGW (Optical Power Ground Wire) conductors, comprise a central tubular core in which are housed bundles of component tubing which carry the optic fibers.

However the drawbacks of using the said OPGW cables, especially in connection with the substitution of conventional earth conductors by OPGW, are evident, given that the complexity of the manufacture of such cables, as can be understood, means that their resulting cost price is excessive.

On the other hand there are also known dielectric optic fiber cables in which the bundle of component tubing for the optic fibers, adequately sealed against moisture and arranged around a central dielectric core to which they are retained by a strip of synthetic material, are lined by a layer of aramide fibers which is taped in its turn by a synthetic strip and lined externally by an insulating, mechanically resistant, covering.

In this case the arrangement of the layer of aramide fibers and the sole, simple, taping of the same has been shown to be deficient in absorbing adequately the mechanical stress generated by an impact.

DE-A-3823965 discloses a cable comprising eight fibers of optic fiber gradient, coated with plastic and placed around a core or the like, which is coated with aramide or glass fibers. The intermediate gaps are filled with a load that stops water in longitudinal direction, and around said load is placed a polymer-elastomer coating. Around this coating are provided an intermediate coating and an outer coating of cross-linked elastomers. Within the outer coating is arranged an envelope for protection against traction and torsion. Between the polymer-elastomer coating and the intermediate coating is arranged a layer of woven aramide or glass fibers resistant to traction, over which a coating of heat-insulating material has been applied.

DE-A-3824825 discloses a cable having the features of the preamble of claim 1, comprising a core resistant to traction and compression, optical fibers housed in a plurality of component tubes, and an envelope that holds said plurality of component tubes around the core, thereby forming an assembly, a layer with aramide filaments wound spirally over the envelope and taped in turn by a further synthetic strip and an external cover.

### DESCRIPTION OF THE INVENTION

A dielectric optic fiber with anti-impact protection, particulary optimized for protection against the impact of pellets, is characterized in that the component tubes are provided with internal and external anti-moisture sealing, the envelope is a sinthetic strip, and said assembly is enclosed in a waterproof cover of polyurethane arranged to absorb the energy generated by the impact of pellets, over wich waterproof cover said layer with aramide filaments is wound spirally with a broad pitch and held tight to the waterproof cover by two broad pitch spiral tapes composed of woven aramide strips wound in opposite directions and with their edges overlapping, said tapes being arranged to physically block the pellets, the two spiral tapes being held in place by means of said further synthetic strip comprising a nylon tape, wherein the external cover consists of an extruded covering consisting of an antitracking material positioned over the two spiral tapes, so that said cable is resistant to damage caused by intense magnetic fields.

As can be understood the number of aramide strips and their grammage will be a function of the severity of the requirements of the impact that they need to absorb.

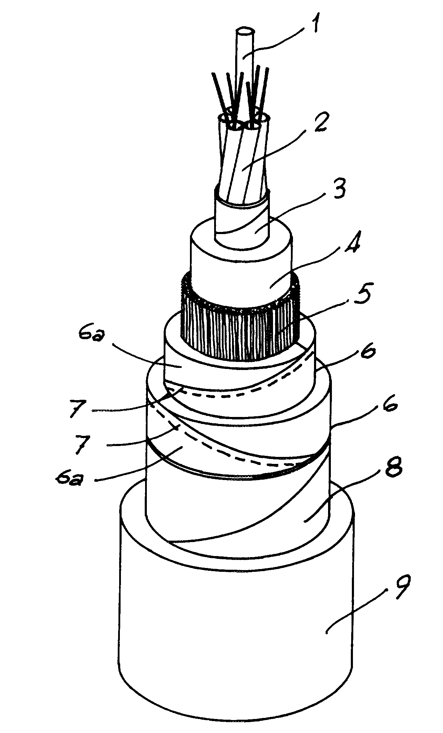

### DESCRIPTION OF THE DRAWING

In order to improve the understanding of this explanation it is accompanied by a drawing which, schematically and with only the status of example, and without any limiting character, represents a practical case of an embodiment of a cable constituted according to the indicated improvements.

In the said drawing the figure shows a perspective view of a section of cable, revealing the structure of its various layers.

### DESCRIPTION OF A PREFERRED EMBODIMENT

As can be seen in the aforementioned drawing the dielectric cable represented, which comprises a core -1-, resistant to traction and compression, a bundle of component tubing -2- of optic fibers with internal and/or external anti-moisture sealing, and a synthetic strip -3- which subjects the said tubing around the core -1-, is characterised in that the above assembly is enclosed in a covering of polyurethane -4- designed to absorb the energy generated by the impact of the pellets.

A thin, uniform, layer -5- of aramide filaments is placed round the said covering, wound spirally with a broad pitch and held tight to the covering by two spiral tapes -6- composed of aramide strips, arranged with their coils -6a- wound in the opposite direction and with overlapping edges. The number of tapes -6-, with a minimum of two, together with the thickness and grammage of the same, will be a function of the resistance which it is desired to obtain in the face of the impacts which the assembly needs to absorb.

The double tape -6- is held in place by means of an external nylon tape -8-, over which is laid the extruded covering -9- of a material which is resistant to intense magnetic fields (antitracking).

In this way it is possible to obtain cables which, in addition to their high mechanical resistance to the mentioned impacts, can be manufactured with a relatively small diameter, in contrast to those known previously, a feature which is ideal for their being installed and retained, by means of appropriate clamps, along the earth conductors currently found in high tension lines, rendering unnecessary their substitution by the previously mentioned OPGW conductors which, as has been indicated, prove to be very costly.

### DESCRIPTION OF A SELECTED TEST

In order to demonstrate the effectiveness of a cable constituted according to the improvements which are the object of the invention there follows a description of a selected laboratory test, together with the results obtained. The cable tested was constituted using the components which appear in the aforementioned drawing, with an optic core comprising six component conductors, or tubes, which house in their interior six monomode optic fibers and the central resistance element.

Specimen three meter lengths of cables were used, with shots being fired at each specimen from a different distance. The test was carried out in the open, firing from various distances and with projectiles of different diameters of the kind commonly used by hunters.

The arm used was a 12 caliber MUNDIAL PR shotgun with ammunition cartridges of high density 12/67/16, of the brand 41 Oro C.12/67, with polyethylene biorientated casing, PSB powder and a stainless American style percussion cap. 32 gm extra-hard pellets (UNE 37.204) were used, of 6 and 7 caliber.

Firing distances varied between 20 and 40 meters, with the direction of fire centering on the cable, and three shots with discernible impact were fired for each caliber and at each range.

A number of clear markers (using tape) were positioned in the centre of each specimen, and one part (1.5 metres) was used for caliber 6 shots and the other part (1.5 metres) for caliber 7 ones. Each specimen was fastened to a strip of aluminum wire which was held in place horizontally, tensed between two posts driven into the ground.

The caliber 6 shots were effected on the left part of each specimen and the caliber 7 ones on the right, the specimens then being examined layer by layer.

In order to evaluate the optical continuity of each fiber a specimen of the same cable (1.5 metres) which had not been subjected to the firing test was used as a reference point. The assessment was obtained by introducing light into one end of the fiber using a stabilized light source LASER 1300 (Anritsu brand, model MG921A) and measuring the optic power at the other end using a connector of bare fiber and a power meter (Anritsu brand, model ML910A).

It was considered that there was no alteration in optic transmission when the difference in power between the reference fiber and the test specimen did not present a dispersion greater than that associated with the uncertainty of the measure itself. The evaluation was carried out for each and all of the optic fibers which composed each specimen.

The results of the firing test for the two calibers and distances were the following:

| Caliber 6 | Distance 20m | Distance 40m |
|---|---|---|
| Impacts on external cover | More than 35 | 8 |
| Nylon tape | Perforated | Various perf. |
| Aramide tape (1st layer) | 13 pellets | 2 ext marks |
| Aramide tape (2nd layer) | 11 marks | No marks |
| Aramide filament | Various marks | No marks |
| Inner covering | Small external deformations | Intact |
| Core wrapping strip | Intact | Intact |
| Optic fibers | Not affected | Not affected |

| Caliber 7 | | |
|---|---|---|
| Impacts on external cover | More than 35 | 11 |
| Nylon tape | Perforated | Various perf. |
| Aramide tape (1st layer) | 24 pellets | 2 ext. marks |
| Aramide tape (2nd layer) | 1 perf. and more than 10 marks | No marks |
| Aramide filaments | Various marks | No marks |
| Inner covering | Small external deformations | Intact |
| Core wrapping strip | Intact | Intact |
| Optic fibers | Not affected | Not affected |

Throughout these tests no appreciable increase in optic loss was observed.

## Claims

1. A dielectric optic fiber cable with anti-impact protection, particularly optimized for protection against the impact of pellets, comprising a core (1) resistant to traction and compression, optical fibers housed in a plurality of component tubes (2), and an envelope (3) that holds said plurality of component tubes (2) around the core (1), thereby forming an assembly, a layer (5) with aramide filaments wound spirally over the envelope (3) and taped in turn by a further synthetic strip (8) and an external cover (9), characterised in that the component tubes (2) are provided with internal and external anti-moisture sealing, the envelope (3) is a synthetic strip, and said assembly is enclosed in a waterproof cover of polyurethane (4) arranged to absorb the energy generated by the impact of pellets, over which waterproof cover (4) said layer (5) with aramide filaments is wound spirally with a broad pitch and held tight to the waterproof cover (4) by two broad pitch spiral tapes (6) composed of woven aramide strips wound in opposite directions and with their edges (7) overlapping, said tapes being arranged to physically block the pellets, the two spiral tapes (6) being held in place by means of said further synthetic strip comprising a nylon tape (8), wherein the external cover consists of an extruded covering (9) consisting of an antitracking material positioned over the two spiral tapes (6), so that said cable is resistant to damage caused by intense magnetic fields.

## Patentansprüche

1. Dielektrisches faseroptisches Kabel mit Stoßschutz, insbesondere optimiert zum Schutz gegen den Aufprall von Geschossen, bestehend aus einem zug- und kompressionsresistenten Kern (1), optischen Fasern, die in zahlreichen Komponentenrohren (2) aufgenommen sind, einer Umhüllung (3), welche die zahlreichen Komponentenrohre (2) um den Kern (1) hält, um dadurch eine Anordnung zu bilden, einer Schicht (5) mit Aramidfasern, die spiralförmig über die Umhüllung (3) gewickelt sind und ihrerseits von einem weiteren synthetischen Streifen (8) umwickelt sind, und aus einer Außenschicht (9),
dadurch gekennzeichnet, daß die Komponentenrohre (2) mit einer Innen- und Außenfeuchtigkeitsdichtung versehen sind, daß die Umhüllung (3) ein synthetischer Streifen ist, und daß die Anordnung in einer wasserdichten Umhüllung aus Polyurethan (4) eingeschlossen ist, um die vor dem Aufprall von Geschossen erzeugte Energie zu absorbieren, wobei über die wasserdichte Umhüllung (4) die Schicht (5) mit Aramidfasern spiralförmig mit einer breiten Teilung gewickelt und fest an der wasserdichten Umhüllung (4) mittels zwei breiten Spiralteilungsbändern (6) gehalten sind, welche aus gewebten Aramidstreifen bestehen, welche in entgegengesetzten Richtungen gewikkelt sind, wobei ihre Ränder (7) überlappen, wobei die Bänder für das körperliche Blockieren der Geschosse vorgesehen sind, wobei die beiden Spiralbänder (6) in ihrer Stellung mittels des weiteren synthetischen Streifens, der ein Nylonband (8) aufweist, gehalten sind, wobei die Außenschicht aus einer extrudierten Umhüllung (9) besteht, welche aus einem abschirmenden Material besteht, das über den beiden Spiralbändern (6) derart angeordnet ist, daß das Kabel gegenüber einer durch intensive elektrische Felder verursachten Beschädigung resistent ist.

## Revendications

1. Câble à fibres optiques diélectriques muni d'une protection anti-impact, en particulier optimisé pour la protection contre l'impact de grosses particules, comprenant un noyau (1) résistant à la traction et à la compression, des fibres optiques logées dans une pluralité de tubes le composant (2) et une enveloppe (3) qui maintient ladite pluralité de tubes (2) autour du noyau (1) de manière à former un ensemble, une couche (5) avec des filaments d'Aramide enroulée en hélice sur l'enveloppe (3) et enrubannée à son tour par un autre ruban synthétique (8) et un revêtement externe (9), caractérisé en ce que les tubes (2) sont munis de joints anti-humidité interne et externe, l'enveloppe (3) est un ruban synthétique et ledit ensemble est reçu dans un revêtement étanche à l'eau de polyuréthanne (4) agencé pour absorber l'énergie générée par l'impact des grosses particules, sur lequel revêtement étanche à l'eau (4) ladite couche (5) avec des filaments d'Aramide est enroulée en hélice avec un pas large et maintenue serrée contre le revêtement étanche à l'eau (4) par deux bandes en hélice à pas large (6), composées de rubans d'Aramide tissés, enroulés dans des directions opposées et avec leurs bords (7) se chevauchant, lesdites bandes étant agencées pour bloquer physiquement les grosses particules, les deux bandes en hélice (6) étant maintenues en position au moyen dudit autre ruban synthétique comprenant une bande de nylon (8), dans lequel le revêtement externe consiste en un revêtement extrudé (9) comprenant un matériau d'anti-cheminement placé sur les deux bandes en hélice (6), de manière que ledit câble est résistant à des dommages causés par des champs magnétiques intenses.
